# EUROPÄISCHE PATENTSCHRIFT

(11) **EP 1 361 822 B1**
(45) Veröffentlichungstag und Bekanntmachung des Hinweises auf die Patenterteilung: **07.05.2008**
(21) Anmeldenummer: 01985869.5
(22) Anmeldetag: 12.12.2001
(51) Int. Cl.: A61B 5/22

(54) **ERGOMETER MIT EINER IM BEREICH EINER WELLENLAGERUNG ANGEORDNETEN SENSOREINHEIT**
ERGOMETER COMPRISING A SENSOR UNIT LOCATED IN THE VICINITY OF A SHAFT BEARING
ERGOMETRE AVEC UNE UNITE DE CAPTEUR INTEGREE DANS UN PALIER D'AXE

(30) Priorität: 12.12.2000 DE 10061923
(43) Veröffentlichungstag der Anmeldung: 19.11.2003
(73) Patentinhaber: Feo Elektronik GmbH, 88250 Weingarten (DE)
(72) Erfinder: CLUS, David, 88285 Bodnegg (DE); MARQUART, Volker, 88250 Weingarten (DE); FRÄNKEL, Martin, 88281 Schlier (DE)
(74) Vertreter: Daub, Thomas
(86) Internationale Anmeldenummer: PCT/EP2001/014574
(87) Internationale Veröffentlichungsnummer: WO 2002/047551

(56) Entgegenhaltungen:
- EP-A- 0 983 934
- DE-A- 3 813 681
- DE-A- 4 108 905
- US-A- 6 098 469
- US-A- 6 148 262

## Beschreibung

### Stand der Technik

Die Erfindung geht aus von einem Ergometer nach dem Oberbegriff des Anspruchs 1.

Aus der DE 38 13 681 A1 ist ein gattungsbildender Ergometer für Geräte, insbesondere für Fahrräder, bekannt, bei denen über eine Welle eine Drehbewegung einleitbar ist. Im Bereich einer Lagerung der Welle ist ein Kraftaufnehmer angeordnet, der mit einem Rechner verbunden ist, in den Daten über den zurückgelegten Weg eingebbar ist. Mit dem Rechner kann eine eingebrachte Arbeit ermittelt werden.

Der Erfindung liegt die Aufgabe zugrunde, einen gattungsbildenden Ergometer weiterzuentwickeln, und zwar insbesondere hinsichtlich seiner Nützlichkeit für ein effektives Training. Sie wird gemäß der Erfindung durch die Merkmale des Anspruchs 1 gelöst. Weitere Ausgestaltungen ergeben sich aus den Unteransprüchen.

### Vorteile der Erfindung

Die Erfindung geht aus von einem Ergometer für Geräte, insbesondere für Fahrräder, mit einer Welle, an der zumindest zwei in axialer Richtung versetzt angeordnete Antreibmittel angeordnet sind, und mit zumindest einer im unmittelbaren Bereich einer Lagerung der Welle angeordneten Sensoreinheit, über die wenigstens eine Kenngröße für eine eingeleitete Kraft an der Welle, insbesondere eine Kenngröße für eine Lagerkraft, erfaßbar ist, und mit wenigstens einer Auswerteeinheit bzw. Recheneinheit, wobei über die Sensoreinheit eine Kenngröße erfaßbar ist, über die mit der Auswerteeinheit an den zumindest zwei Antreibmitteln eingebrachten Kräfte getrennt ermittelbar sind. Es kann mit einer konstruktiv einfachen und kostengünstigen Sensoreinheit ein gezieltes Training einzelner Gliedmaßen, insbesondere der Beine, beim Fahrradfahren erreicht werden. Im Leistungssport kann ein gleichmäßiger Tritt und eine Leistungssteigerung erreicht werden. Bei einer Therapie können beispielsweise je Bein gezielte Leistungsvorgaben eingehalten, die Therapie kann beschleunigt und der Therapieerfolg kann einem Bediener sichtbar gemacht werden. Durch die Gestaltung der Sensoreinheit in der Weise, daß Kenngrößen für Lagerkräfte der Welle erfaßt werden können, kann diese mit geringem konstruktiven Aufwand an bestehende Systeme einfach angepaßt werden.

Über die Sensoreinheit sind zumindest zwei in axialer Richtung versetzt angreifende Kräfte erfaßbar. Besitzt die Lagerung zumindest zwei axial versetzt angeordnete Lager, wird vorteilhaft jeweils im Bereich der Lager zumindest ein Sensor der Sensoreinheit angeordnet. Es kann ein vorteilhaft großer axialer Abstand zwischen den Sensoren und es können besonders exakte Meßwerte erreicht werden. Grundsätzlich wäre jedoch auch möglich zwei axial versetzte Sensoren auf einem Lager der Sensoreinheit anzuordnen.

Ist über die Sensoreinheit eine Kenngröße erfaßbar, über die mit der Auswerteeinheit zumindest eine in axialer Richtung der Welle eingebrachte Kraft an wenigstens einem Antreibmittel, vorzugsweise an beiden Antreibmitteln, ermittelbar ist, können uneffektive Krafteinleitungen vermieden und eine erhöhte Antriebsleistung erreicht werden.

Ferner wird vorgeschlagen, daß über die Sensoreinheit eine Kenngröße erfaßbar ist, über die mit der Auswerteeinheit an zumindest einem Antreibmittel, vorzugsweise an beiden Antreibmitteln, zumindest zwei in Umfangsrichtung versetzt angreifende Kräfte ermittelbar sind, so daß insbesondere eine am Antriebsmittel eingebrachte Kraft in zumindest zwei verschiedenen Winkelstellungen des Antriebsmittels erfaßbar bzw. daß insbesondere eine Kraft in zumindest einer Ebene nach Betrag und Richtung auflösbar ist. Dadurch kann insbesondere beim Einsatz an einem Fahrrad erreicht werden, daß ein sogenannter Runder-Tritt gezielt trainierbar ist, und daß eine Krafteinleitung vom linken und vom rechten Bein getrennt vorteilhaft über den gesamten zeitlichen Bewegungsablauf über 360° gezielt erfaßt, korrigiert und verbessert werden kann. Einzelne Muskelpartien können je Bein gezielt trainiert werden, was neben dem Leistungssport auch insbesondere für Therapiezwecke von großem Vorteil ist.

Konstruktiv einfach können die entsprechenden Kenngrößen erfaßt werden, indem zumindest zwei Sensoren der Sensoreinheit in Umfangsrichtung versetzt angeordnet sind, und zwar insbesondere jeweils an einem Lager. Anstatt mehrere Sensoren in Umfangsrichtung und/oder in axialer Richtung versetzt anzuordnen, können auch vorteilhaft Sensoren verwendet werden, die sich über einen axialen, radialen und/oder über einen Umfangsbereich erstrecken und über die Kenngrößen für einen Kräfteverlauf über dem Bereich erfaßbar sind. Einzelne Sensoren, Bauraum, Gewicht und Montageaufwand können eingespart werden. Ferner können mit wenigen Sensoren viele Kenngrößen bzw. Meßwerte erfaßt werden.

Die Sensoren der Sensoreinheit können an verschiedenen, dem Fachmann als sinnvoll erscheinenden Stellen der Lagerung der Welle angeordnet sein. Vorteilhaft sind die Sensoren der Sensoreinheit jedoch zu einem Gehäuseteil des Geräts bzw. zu einem Rahmenteil des Fahrrads ruhend angeordnet, wodurch eine einfache Datenübertragung von der Sensoreinheit zu der Auswerteeinheit erreicht werden kann. Möglich ist jedoch auch, die Sensoren drehfest mit der Welle zu verbinden und die Daten beispielsweise über Funk, über Infrarot oder über einen Schleifkontakt usw. zu übertragen.

Die Sensoren können vorteilhaft zwischen der Welle und einem Innenring eines Lagers oder zwischen einem Außenring eines Lagers und einer Lagerstelle im Gehäuse bzw. in einem Rahmenteil angeordnet werden, wobei vorteilhaft im Bereich der Sensoren, entsprechende radiale Ausnehmungen vorgesehen werden, um zu vermeiden, daß diese bei der Montage abgeschert werden. Zusätzlich kann auch ein Schutz- und/oder Sensorring vorgesehen werden, an dem die Sensoren vorteilhaft vormontiert und möglicherweise geschützt vor äußeren Einflüssen eingegossen sein können. Ferner kann mit einem zusätzlichen Sensorring bei einer bestimmten Belastung eine definierte Verformung erreicht werden, unabhängig von bereits bestehenden Bauteilen.

Mit den Sensoren kann direkt eine Druckkraft erfaßt werden oder eine Verformung eines Bauteils, von der auf eine bestimmte Druckkraft geschlossen werden kann. Die Sensoren können insbesondere dadurch an einer Stirnseite eines Lagerbauteils, beispielsweise an einem Lagerring eines Lagers, an einer Nabe eines Fahrradrahmens oder an einem speziellen Sensorring der Lagerung angeordnet werden, wodurch Ausnehmungen für die Sensoren vermieden und die Sensoren besonders unempfindlich montiert werden können.

Es sind verschiedenartige, dem Fachmann als sinnvoll erscheinende Sensoren denkbar, die infolge von Widerstandsänderungen und/oder Spannungsänderungen usw. auf bestimmte Verformungen oder Kräfte schließen lassen, wie beispielsweise Dehnmeßstreifen, folienförmige Piezo-Sensoren, folienförmige Polymer-Sensoren usw. Besonders vorteilhaft werden jedoch Sensoren verwendet, die in eine Beschichtungsverfahren positionierbar sind, wie in einem Lackierverfahren oder insbesondere in einem Siebdruckverfahren usw. Die Sensoren können kostengünstig, exakt positioniert und besonders platzsparend, leicht und einen Bereich abdeckend ausgeführt werden, wodurch derartige Sensoren vorteilhaft bei Fahrräder eingesetzt werden können. Derartige Sensoren können jedoch auch vorteilhaft bei anderen Lagern zur Erfassung von Lagerkräften eingesetzt werden.

In einer weiteren Ausgestaltung der Erfindung wird vorgeschlagen, daß in der Auswerteeinheit neben den von der Sensoreinheit erfaßten Kenngrößen zumindest eine weitere Kenngröße von einer weiteren Sensoreinheit auswertbar ist. Durch die gemeinsame Auswertung können weitere vorteilhafte Informationen gewonnen werden, die insbesondere zur Verbesserung der Technik und der Leistungsfähigkeit genutzt werden können.

Neben üblichen Kenngrößen, wie für eine Geschwindigkeit, einer zurückgelegten Strecke, einer Fahrzeit, einer Trittfrequenz, einer Herzfrequenz, einen Kalorienverbrauch, eine Umgebungstemperatur usw. können im Zusammenhang mit der erfindungsgemäßen Lösung Kenngrößen für einen Fahrtwind, für eine Gewichtsverteilung an einem Sitz, Kenngrößen für eine geographische Höhe, Kenngrößen für eine vorliegende Steigung und/oder Kenngrößen für einen geographischen Standort besonders von Vorteil sein. Insbesondere mit Kenngrößen über den Fahrtwind, der tatsächlichen Geschwindigkeit, der eingebrachten Arbeit bzw. Leistung und der vorliegenden Steigung kann auf eine vorteilhafte oder unvorteilhafte Sitzhaltung geschlossen werden, wobei zudem Kenngrößen über eine Gewichtsverteilung an einem Sitz bzw. Sattel mit einbezogen werden können. Ferner können unerwünschte Schaukelbewegungen auf einem Sattel erkannt und eliminiert werden.

Der Einsatz beider Beine kann abhängig von unterschiedlichen Randbedingungen überwacht und entsprechend verbessert werden. Durch die Kombination mit einer Einrichtung zur Bestimmung eines geographischen Standorts und beispielsweise einer geplanten Wegstrecke, können zukünftige Randbedingungen, beispielsweise zukünftig anstehende Steigungen, gezielt in eine aktuelle Leistungsabgabe mit eingebunden werden, wodurch beispielsweise ein effektives Intervalltraining für das linke und/oder rechte Bein und/oder einzelne Muskelpartien erreicht werden kann, und der Trainingseffekt enorm gesteigert werden kann. Ferner können Strecken für bestimmte Trainingszwecke vorteilhaft ausgewählt und abhängig von aktuellen Daten auch korrigiert werden. Die Einheit zur Bestimmung des geographischen Standorts kann beispielsweise von einem handelsüblichen, auf einer Satellitenkommunikation basierenden GPS (GPS: Global-positioning-system) aus der Kraftfahrzeugtechnik gebildet sein. Mit einem derartigen System kann auch auf andere wichtige Informationen geschlossen werden, beispielsweise auf eine vorliegende geographische Höhe, eine vorliegende Steigung usw., wodurch andere Sensoreinheiten bzw. Sensoren eingespart werden können.

Ferner wird vorgeschlagen, daß ausgehend von einzelnen und insbesondere mehreren Kenngrößen über die Auswerteeinheit eine Kenngröße für eine vorteilhafte Übersetzung ermittelbar ist. Übersteigt beispielsweise die eingeleitete Kraft eines Beins über einen bestimmten Winkelbereich einen vorbestimmten Wert, kann mit einer entsprechenden Übersetzungsvorgabe dagegen gesteuert werden. Es können gezielt bestimmte Trainingsstrategien und/oder Fahrtechniken verfolgt werden, wie beispielsweise stets mit einer relativ hohen Trittfrequenz und einem relativ kleinen Kraftaufwand oder umgekehrt zu fahren, wofür entsprechende Daten bzw. Kennlinien in der Auswerteeinheit hinterlegt sein können. Ferner kann abhängig von bestimmten Trainingszuständen und Trainingswünschen eine Übersetzung vorgegeben werden, beispielsweise abgestimmt auf ein Regenerationstraining, ein Muskelaufbautraining, ein Bergtraining usw.

Die Übersetzung kann ausschließlich über eine entsprechende Ausgabeeinheit akustisch und/oder optisch ausgegeben werden, oder es kann mit einer Steuereinheit ein entsprechender Schaltvorgang eines Getriebes zumindest teilweise automatisch eingeleitet werden. Der Komfort kann gesteigert und es kann sicher gestellt werden, daß bestimmte Trainingsrichtlinien konsequent eingehalten werden.

Um Daten von einer am Gerät bzw. Fahrrad angebrachten Auswerteeinheit auf eine andere, möglicherweise leistungsstärkere Auswerteeinheit übertragen zu können, besitzt die mobile Auswerteeinheit am Gerät bzw. am Fahrrad vorteilhaft eine Schnittstelle, über die zumindest Daten an eine zweite Auswerteeinheit und/oder Ausgabeeinheit übermittelt werden können. Die Daten können seriell und/oder parallel über Datenleitungen und/oder schnurlos mit einer Sende- und Empfangseinheit über Funk und/oder Infrarot übertragen werden, und zwar insbesondere von der zweiten Auswerteeinheit zur mobilen Auswerteeinheit. Dabei kann es auch von Vorteil sein, daß die mobile Auswerteeinheit vom Fahrrad schnell abnehmbar ausgeführt ist, beispielsweise indem diese mit einer lösbaren Rastverbindung mit dem Fahrrad verbunden ist.

Die Daten können nach einem Trainingsintervall und/oder während eines Trainingsintervalls übermittelt werden. Um insbesondere das Fahrverhalten eines Fahrradfahrers von außen überwachen und möglicherweise beeinflussen zu können, beispielsweise von einem Arzt, einem Trainer und/oder von einem interessierten Zuschauer bei einem hochrangigen Rennen, sind vorteilhaft von der mobilen Auswerteeinheit mit einer Einheit über Funk Daten an die zweite Auswerte- und/oder Ausgabeeinheit übermittelbar. Die Einheit kann von einer reinen Sendeeinheit oder vorteilhaft von einer Sende- und Empfangseinheit gebildet sein, wodurch mit der mobilen Auswerteeinheit auch Informationen empfangen werden können.

Der erfindungsgemäße Ergometer kann bei verschiedenen, dem Fachmann als sinnvoll erscheinenden Geräten eingesetzt werden, wie insbesondere bei Fahrrädern, Heimtrainern oder Geräten, die anstatt mit den Beinen entsprechend mit den Händen angetrieben werden usw.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein schematisch dargestelltes Fahrrad mit einem erfindungsgemäßen Ergometer,
- Fig. 2: einen Schnitt durch ein Tretlager aus Fig. 1,
- Fig. 3: eine Ansicht des Tretlagers aus der Richtung III in Fig. 2 ohne Sicherungsring,
- Fig. 4: eine Variante zu Fig. 2,
- Fig. 5: einen vergrößerten Ausschnitt V aus Fig. 4,
- Fig. 6: eine Ansicht eines Tretlagers aus der Richtung VI in Fig. 5,
- Fig. 7: eine Variante zu Fig. 2 und
- Fig. 8: eine Ansicht eines Tretlagers aus der Richtung VIII in Fig. 7.

### Beschreibung der Ausführungsbeispiele

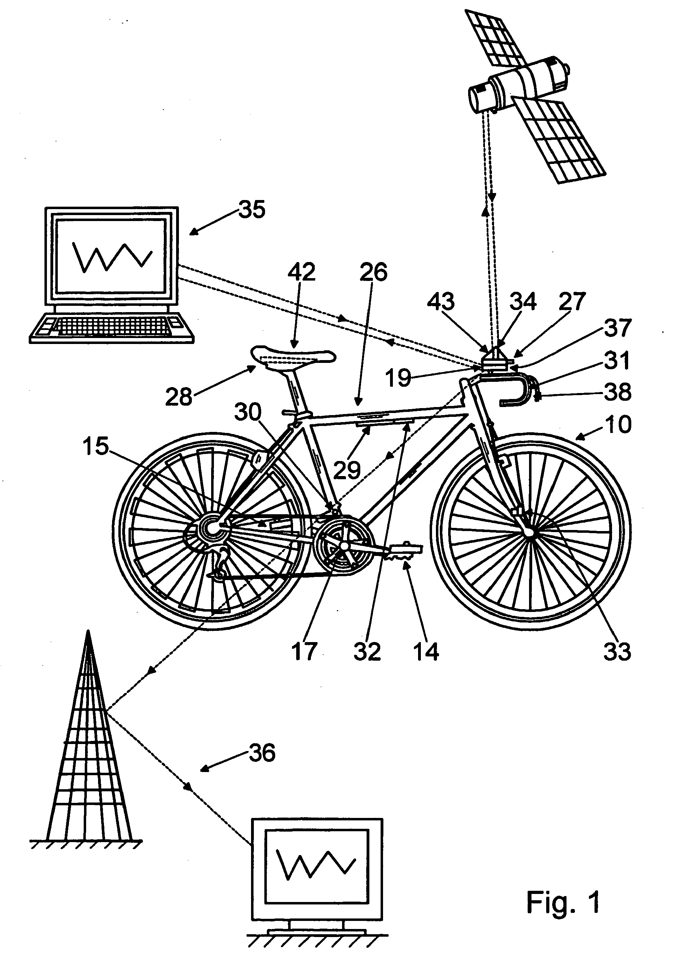

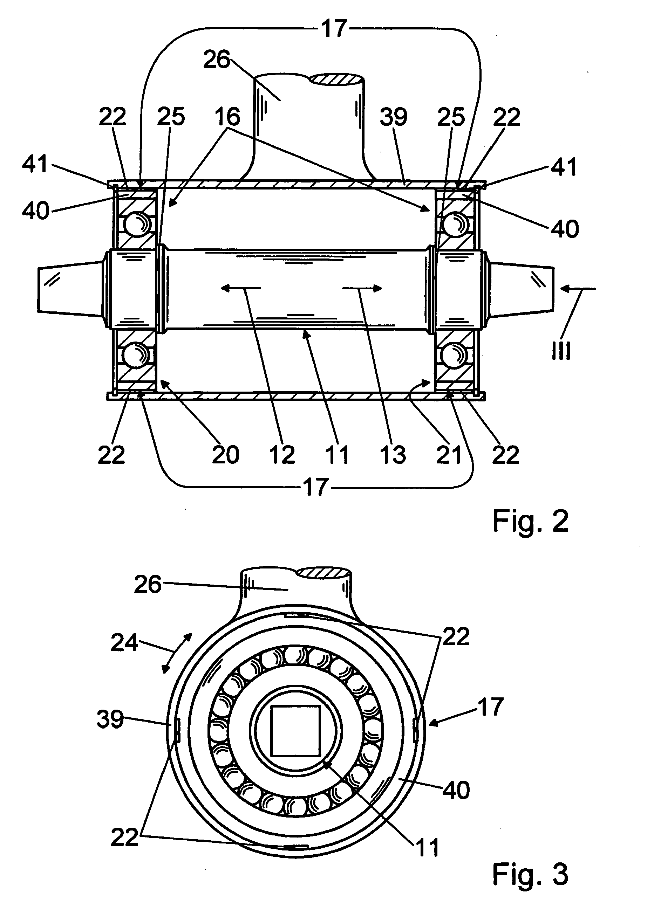

Fig. 1 zeigt ein Fahrrad 10 mit einem erfindungsgemäßen Ergometer. Das Fahrrad 10 besitzt eine Welle 11, an dessen Enden zwei Antreibmittel 14, 15 mit jeweils einer Tretkurbel und einem Pedal angeordnet sind (Fig. 2 und 3).

Eine Lagerung 16 der Welle 11 besitzt zwei in axialer Richtung 12, 13 versetzt angeordnete Kugellager 20, 21 mit jeweils einem auf der Welle 11 drehfest angeordneten Innenring und einem zu einer Nabe 39 eines Fahrradrahmens 26 drehfest angeordneten Außenring. Lagerkräfte der Welle 11 werden jeweils über den Innenring, Kugeln des Wälzlagers, über den Außenring und über einen Sensorring 40 einer Sensoreinheit 17 in der Nabe 39 radial nach außen abgestützt. Der Sensorring 40 besitzt an seinem Außenumfang vier gleichmäßig über den Umfang verteilt eingebrachte Ausnehmungen, in denen jeweils ein Piezo-Drucksensor 22 angeordnet ist. Die Piezo-Drucksensoren 22 sind zur Nabe 39 und zum Fahrradrahmen 26 ruhend angeordnet und liegen radial nach innen an dem Sensorring 40 und radial nach außen an der Nabe 39 an, so daß über die Piezo-Drucksensoren 22 Lagerkräfte der Kugellager 20, 21 erfaßt werden können. Anstatt an einem Außenumfang eines Sensorrings könnten die Piezo-Sensoren 22 auch an einer anderen Stelle des Kraftflusses zwischen der Welle 11 und der Nabe 39 angeordnet sein.

Die Piezo-Drucksensoren 22 des Kugellagers 20 besitzen einen axialen Abstand zu den Piezo-Drucksensoren 22 des Kugellagers 21 und besitzen untereinander einen Abstand in Umfangsrichtung 24, so daß vorteilhaft über die Sensoreinheit 17 erfindungsgemäß Kenngrößen erfaßt werden können, über die mit einer an einem Lenker 38 des Fahrrads 10 lösbar befestigten Auswerteeinheit 19 bzw. Recheneinheit getrennt an den Antreibmitteln 14, 15 eingebrachte Kräfte jeweils in deren Bewegungsrichtung über 360° ermittelbar sind.

Ferner sind über die Sensoreinheit 17 Kenngrößen erfaßbar, über die mit der Auswerteeinheit 19 in axialer Richtung 12, 13 der Welle 11 eingebrachte Kräfte über die Antreibmittel 14, 15 ermittelbar sind. Die Sensoreinheit 17 besitzt hierfür zwei ringförmige Piezo-Drucksensoren 25, die im radial inneren Bereich, an der axial nach innen weisenden Seite der Innenringe der Kugellager 20, 21 sich jeweils über den gesamten Umfang erstrecken. Die Kugellager 20, 21 sind als Festlager ausgebildet, und zwar sind diese axial nach außen jeweils über einen Sicherungsring 41 in der Nabe 39 gesichert. Die Sicherungsringe 41 überdecken zudem die Ausnehmungen mit den Piezo-Drucksensoren 22 und schützen diese vor direkten äußeren Einflüssen. Wird über ein Antreibmittel 14 oder 15 eine Kraft in axialer Richtung 12 oder 13 eingeleitet, kann diese über die Piezo-Drucksensoren 25 erfaßt werden.

In der Auswerteeinheit 19 sind neben den von der Sensoreinheit 17 erfaßten Kenngrößen Kenngrößen von weiteren Sensoreinheiten 27, 28, 29, 30, 31, 32, 33 auswertbar. Über die Sensoreinheit 27 können mit einem Staudruckrohr Kenngrößen für einen Fahrtwind, über die Sensoreinheit 28 können mit Drucksensoren Kenngrößen für eine Gewichtsverteilung an einem Sattel 42 des Fahrrads 10, über die Sensoreinheit 29 können mit einem Neigungssensor Kenngrößen für eine vorliegende Steigung, über die Sensoreinheit 30 können mit einem Magnetschalter Kenngrößen für eine Trittfrequenz, über die Sensoreinheit 31 können mit einem im Lenker 38 integrierten Pulsmesser Kenngrößen für eine Herzfrequenz, über die Sensoreinheit 32 können mit einem Barometrischen-Drucksensor Kenngrößen für eine geographische Höhe und über die Sensoreinheit 33 können mit einem Tachometer Kenngrößen für eine vorliegende Geschwindigkeit und eine zurückgelegte Strecke erfaßt werden. Die Sensoreinheiten 17, 27, 28, 29, 30, 31, 32, 33 sind über nicht näher dargestellte Datenleitungen mit der Auswerteeinheit 19 verbunden. Ferner kann mit einer GPS-Einheit 34 ein geographischer Standort bestimmt und mit in der Auswerteeinheit 19 verarbeitet werden.

Mit den Kenngrößen über den Fahrtwind, der tatsächlichen Geschwindigkeit, der eingebrachten Arbeit bzw. Leistung und der vorliegenden Steigung kann mit der Auswerteeinheit 19 auf eine vorteilhafte oder unvorteilhafte Sitzhaltung geschlossen werden, wobei zudem Kenngrößen über die Gewichtsverteilung an dem Sattel 42 mit einbezogen werden.

Ferner sind in der Auswerteeinheit 19 Kennlinien für verschiedene Trainingsziele, Trainingsarten und Leistungsstandards hinterlegt, abhängig von denen und abhängig von erfaßten Kenngrößen, insbesondere für Trittfrequenz und für Kräfte je Antreibmittel 14, 15, einem Fahrer über eine Ausgabeeinheit 43 am Lenker 38 eine vorteilhafte Übersetzung akustisch und optisch ausgegeben werden kann. Über die Ausgabeeinheit 43 können ferner Informationen über die eingebrachten Kräfte je Antreibmittel 14, 15 über 360° sowie eine Kennzahl für eine vorliegende Sitzhaltung optisch, beispielsweise über Balkendiagramme, und akustisch ausgegeben werden. Dabei können Graphiken und Statistiken von einem Bediener über einen Bildschirm abgerufen werden. Ferner kann die Auswerteeinheit 19 derart eingestellt werden, daß bei unterschreiten und überschreiten bestimmter Kenngrößen, beispielsweise einer Kenngröße für eine Kraft in einer bestimmten Richtung, ein Warnsignal ausgegeben wird.

Während der Fahrt können mit einer Sende- und Empfangseinheit 37 über Funk Daten an eine zweite Auswerteeinheit 35 und Daten an eine reine Ausgabeeinheit 36, und zwar an eine Fernsehstation mit Endgeräten übermittelt werden. An der zweiten Auswerteeinheit 35, die von einem tragbaren Computer bzw. einem Laptop gebildet wird, können über eine nicht näher dargestellte Sende- und Empfangseinheit auch Informationen an die Auswerteeinheit 19 über Funk übermittelt werden.

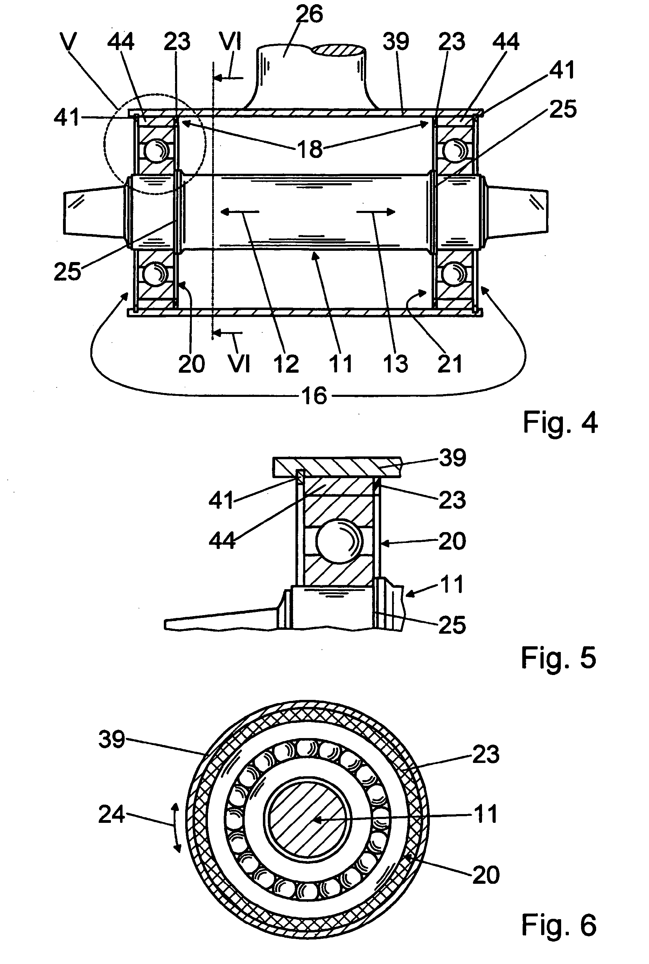

In den Fig. 4 bis 8 sind alternative Sensoreinheiten 18, 48 dargestellt. Im wesentlichen gleichbleibende Bauteile sind grundsätzlich mit den gleichen Bezugszeichen beziffert. Ferner kann bezüglich gleichbleibender Merkmale und Funktionen auf die Beschreibung zum Ausführungsbeispiel in den Fig. 1 bis 5 verwiesen werden. Die nachfolgende Beschreibung beschränkt sich im wesentlichen auf die Unterschiede zum Ausführungsbeispiel in den Fig. 1 bis 3.

Beim Ausführungsbeispiel in den Fig. 4 bis 6 sind die Kugellager 20, 21 jeweils radial nach außen über einen Sensorring 44 abgestützt, deren axial nach innen weisende Stirnseiten über den gesamten Umfang jeweils mit einem Sensor 23 aus einer Dickschichtpaste in einem Siebdruckverfahren beschichtet sind. Die Sensorringe 44 und mit ihnen die Sensoren 23 sind ruhend zum Fahrradrahmen 26 angeordnet.

Steigen die Lagerkräfte in eine Richtung, werden die Sensorringe 44 entsprechend definiert verformt und mit ihnen die Sensoren 23, dessen Verformungsgrade aufgrund von Widerstandsänderungen erfaßt werden können. Die Widerstandsänderungen werden mit Hilfe von nicht näher dargestellten Brükkenschaltungen gemessen, wobei die Sensoren 23 mit nicht näher dargestellten flexiblen Leiterplatten kontaktiert sind. Über die Sensoren 23 können somit Kenngrößen für die Lagerkräfte erfaßt werden, über die mit der Auswerteeinheit 19 getrennt an den Antreibmitteln 14, 15 eingebrachte Kräfte ermittelt werden können, und zwar jeweils über 360° in Bewegungsrichtung der Antreibmittel 14, 15.

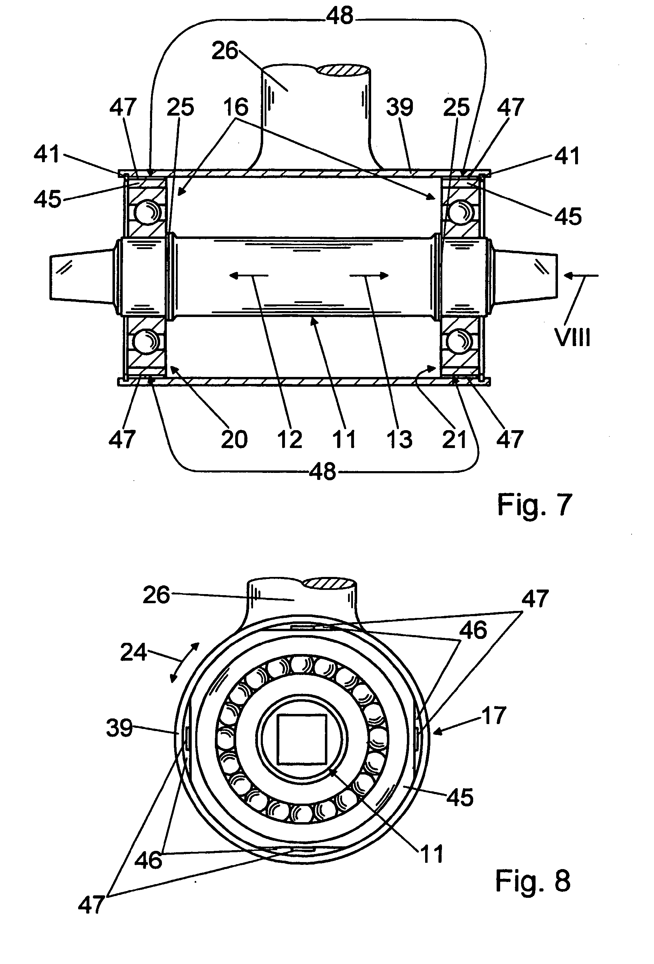

Beim Ausführungsbeispiel in Fig. 7 und 8 sind entsprechend dem Ausführungsbeispiel in den Fig. 1 bis 3 zwei Sensorringe 45 der Sensoreinheit 48 jeweils zwischen einem Außenring eines Lagers 20, 21 und einer Lagerstelle in einem Gehäuseteil 26 bzw. einem Rahmenrohr 39 angeordnet. Die Sensorringe 45 besitzen an ihrem Außenumfang vier gleichmäßige über den Umfang verteilte, von Abflachungen gebildete Ausnehmungen 46, in denen jeweils ein von einem Dehnmeßstreifen gebildeter Sensor 47 angeordnet ist. Grundsätzlich sind jedoch auch andere Sensoren denkbar.

Steigen die Lagerkräfte in eine Richtung, werden die Sensorringe 45 entsprechend definiert verformt, und zwar wölben sich die Abflachungen radial nach außen, wodurch die Sensoren 47 gedehnt werden.

### Bezugszeichen

- 10: Fahrrad
- 11: Welle
- 12: Richtung
- 13: Richtung
- 14: Antreibmittel
- 15: Antreibmittel
- 16: Lagerung
- 17: Sensoreinheit
- 18: Sensoreinheit
- 19: Auswerteeinheit
- 20: Lager
- 21: Lager
- 22: Sensor
- 23: Sensor
- 24: Umfangsrichtung
- 25: Sensor
- 26: Gehäuseteil
- 27: Sensoreinheit
- 28: Sensoreinheit
- 29: Sensoreinheit
- 30: Sensoreinheit
- 31: Sensoreinheit
- 32: Sensoreinheit
- 33: Sensoreinheit
- 34: Einheit
- 35: Auswerteeinheit
- 36: Ausgabeeinheit
- 37: Einheit
- 38: Lenker
- 39: Nabe
- 40: Sensorring
- 41: Sicherungsring
- 42: Sitz
- 43: Ausgabeeinheit
- 44: Sensorring
- 45: Sensorring
- 46: Ausnehmung
- 47: Sensor
- 48: Sensoreinheit

## Patentansprüche

1. Ergometer für Geräte, insbesondere für Fahrräder (10), mit einer Welle (11), an der zumindest zwei in axialer Richtung (12, 13) versetzt angeordnete Antreibmittel (14, 15) angeordnet sind, und mit zumindest einer im unmittelbaren Bereich einer Lagerung (16) der Welle (11) angeordneten Sensoreinheit (17, 18, 48), über die wenigstens eine Kenngröße für eine eingeleitete Kraft an der Welle (11), insbesondere eine Kenngröße für eine Lagerkraft, erfaßbar ist, und mit wenigstens einer Auswerteeinheit (19, 35), wobei über die Sensoreinheit (17, 18, 48) eine Kenngröße erfaßbar ist, über die mit der Auswerteeinheit (19, 35) an den mindestens zwei Antreibmitteln (14, 15) eingebrachte Kräfte getrennt ermittelbar sind und wobei über die Sensoreinheit (17, 18, 48) zumindest zwei in axialer Richtung (12, 13) versetzt angreifende Kräfte erfaßbar sind, wobei die Lagerung (16) zumindest zwei axial versetzt angeordnete Lager (20, 21) mit jeweils einem Außenring aufweist, und jeweils im Bereich der Lager (20, 21) zumindest ein Sensor (22, 23, 47) der Sensoreinheit (17, 18, 48) angeordnet ist,
**dadurch gekennzeichnet,**
**daß** über die Sensoreinheit (17, 18, 48) eine Kenngröße erfaßbar ist, über die mit der Auswerteeinheit (19, 35) zumindest eine in axialer Richtung (12, 13) der Welle (11) eingebrachte Kraft an wenigstens einem Antreibmittel (14, 15) ermittelbar ist.

2. Ergometer nach Anspruch 1,
**dadurch gekennzeichnet,**
**daß** über die Sensoreinheit (17, 18, 48) eine Kenngröße erfaßbar ist, über die mit der Auswerteeinheit (19, 35) an zumindest einem Antreibmittel (14, 15) zumindest zwei in Umfangsrichtung (24) versetzt angreifende Kräfte ermittelbar sind.

3. Ergometer nach Anspruch 2,
**dadurch gekennzeichnet,**
**daß** zumindest zwei Sensoren (22, 47) der Sensoreinheit in Umfangsrichtung (24) versetzt angeordnet sind.

4. Ergometer nach einem der vorhergehenden Ansprüche,
**dadurch gekennzeichnet,**
**daß** sich zumindest ein Sensor (23) der Sensoreinheit (18) über einen Bereich erstreckt und mit dem Sensor (23) Kenngrößen für einen Kräfteverlauf über dem Bereich erfaßbar sind.

5. Ergometer nach einem der vorhergehenden Ansprüche,
**dadurch gekennzeichnet,**
**daß** zumindest ein Sensor (22, 23, 25, 47) der Sensoreinheit (17, 18, 48) zu einem Gehäuseteil (26) ruhend angeordnet ist.

6. Ergometer nach Anspruch 5,
**dadurch gekennzeichnet,**
**daß** die Sensoreinheit (17, 18, 48) zumindest einen Sensorring (40, 44, 45) mit einem Sensor (22, 23, 25, 47) aufweist.

7. Ergometer nach Anspruch 6,
**dadurch gekennzeichnet,**
**daß** der Sensorring (45) zwischen einem Außenring eines Lagers (20, 21) und einer Lagerstelle im Gehäuseteil (26) angeordnet ist und in zumindest einer Ausnehmung (46) des Sensorrings (45) ein Sensor (47) angeordnet ist.

8. Ergometer nach einem der vorhergehenden Ansprüche,
**dadurch gekennzeichnet,**
**daß** zumindest ein Sensor (23) der Sensoreinheit (18) an einer axialen Stirnseite eines Lagerbauteils (44) angeordnet ist.

9. Ergometer nach einem der vorhergehenden Ansprüche,
**dadurch gekennzeichnet,**
**daß** zumindest ein Sensor (23) in einem Beschichtungsverfahren positionierbar ist.

10. Ergometer nach Anspruch 9,
**dadurch gekennzeichnet,**
**daß** zumindest ein Sensor (23) in einem Siebdruckverfahren positionierbar ist.

11. Ergometer nach einem der vorhergehenden Ansprüche,
**dadurch gekennzeichnet,**
**daß** in der Auswerteeinheit (19, 35) neben den von der Sensoreinheit (17, 18, 48) erfaßten Kenngrößen zumindest eine weitere Kenngröße von einer weiteren Sensoreinheit (27, 28, 29, 30, 31, 32) auswertbar ist.

12. Ergometer nach Anspruch 11,
**dadurch gekennzeichnet,**
**daß** über zumindest eine weitere Sensoreinheit (27) eine Kenngröße für einen Fahrtwind erfaßbar ist.

13. Ergometer nach Anspruch 11 oder 12,
**dadurch gekennzeichnet,**
**daß** über zumindest eine weitere Sensoreinheit (28) Kenngrößen für eine Gewichtsverteilung an einem Sitz (42) erfaßbar sind.

14. Ergometer nach einem der Ansprüche 11 bis 13,
**dadurch gekennzeichnet,**
**daß** über zumindest eine weitere Sensoreinheit (32) eine Kenngröße für eine geographische Höhe erfaßbar ist.

15. Ergometer nach einem der Ansprüche 11 bis 14,
**dadurch gekennzeichnet,**
**daß** über zumindest eine Einheit (34) ein geographischer Standort bestimmbar ist.

16. Ergometer nach einem der Ansprüche 11 bis 15,
**dadurch gekennzeichnet,**
**daß** über zumindest eine weitere Sensoreinheit (29) eine Kenngröße für eine Steigung erfaßbar ist.

17. Ergometer nach einem der Ansprüche 1 bis 10 und einem der Ansprüche 11 bis 16,
**dadurch gekennzeichnet,**
**daß** über die Auswerteeinheit (19, 35) eine Kenngröße für eine vorliegende Sitzhaltung ermittelbar ist.

18. Ergometer nach einem der Ansprüche 1 bis 10 und einem der Ansprüche 11 bis 17,
**dadurch gekennzeichnet,**
**daß** über die Auswerteeinheit (19, 35) eine Kenngröße für eine vorteilhafte Übersetzung ermittelbar ist.

19. Ergometer nach Anspruch 18,
**dadurch gekennzeichnet,**
**daß** über die Kenngröße für eine vorteilhafte Übersetzung mit einer Steuereinheit ein Schaltvorgang eines Getriebes einleitbar ist.

20. Ergometer nach einem der vorhergehenden Ansprüche,
**dadurch gekennzeichnet,**
**daß** eine mobile Auswerteeinheit (19, 35) eine Schnittstelle aufweist, über die zumindest Daten an eine zweite Auswerteeinheit (35) und/oder Ausgabeeinheit (36) übermittelbar sind.

21. Ergometer nach Anspruch 20,
**dadurch gekennzeichnet,**
**daß** von der mobilen Auswerteeinheit (19, 35) mit einer Einheit (37) über Funk Daten an die zweite Auswerteeinheit (35) und/oder Ausgabeeinheit (36) übermittelbar sind.

## Claims

1. Ergometer for items of equipment, in particular for bicycles (10), said ergometer having a shaft (11), on which at least two drive means (14, 15) which are arranged in an offset manner in the axial direction (12, 13) are arranged, and having at least one sensor unit (17, 18, 48) which is arranged in the immediate area of a bearing arrangement (16) of the shaft (11) and by means of which at least one characteristic variable for a force induced on the shaft (11), in particular a characteristic variable for a bearing force, can be detected and having at least one evaluation unit (19, 35), wherein by means of the sensor unit (17, 18, 48) a characteristic variable can be detected, by means of which forces induced on the at least two drive means (14, 15) can be separately determined with the evaluation unit (19, 35), and wherein by means of the sensor unit (17, 18, 48) at least two forces which act in an offset manner in the axial direction (12, 13) can be detected, the bearing arrangement (16) having at least two bearings (20, 21) which are arranged in an axially offset manner and respectively have an outer ring, and at least one sensor (22, 23, 47) of the sensor unit (17, 18, 48) respectively being arranged in the area of the bearings (20, 21),
**characterized in that**
by means of the sensor unit (17, 18, 48) a characteristic variable can be detected, by means of which at least one force induced in the axial direction (12, 13) of the shaft (11) on at least one drive means (14, 15) can be determined with the evaluation unit (19, 35).

2. Ergometer according to Claim 1,
**characterized in that**
by means of the sensor unit (17, 18, 48) a characteristic variable can be detected, by means of which at least two forces which act in an offset manner in the circumferential direction (24) on at least one drive means (14, 15) can be determined with the evaluation unit (19, 35).

3. Ergometer according to Claim 2,
**characterized in that**
at least two sensors (22, 47) of the sensor unit are arranged in an offset manner in the circumferential direction (24).

4. Ergometer according to one of the preceding claims,
**characterized in that**
at least one sensor (23) of the sensor unit (18) extends over an area and that by means of the sensor (23) characteristic variables for a force characteristics over the area can be detected.

5. Ergometer according to one of the preceding claims,
**characterized in that**
at least one sensor (22, 23, 25, 47) of the sensor unit (17, 18, 48) is arranged such that it is at rest with respect to a housing part (26).

6. Ergometer according to Claim 5,
**characterized in that**
the sensor unit (17, 18, 48) has at least one sensor ring (40, 44, 45) having a sensor (22, 23, 25, 47).

7. Ergometer according to Claim 6,
**characterized in that**
the sensor ring (45) is arranged between an outer ring of a bearing (20, 21) and a bearing point in the housing part (26), and a sensor (47) is arranged in at least one recess (46) of the sensor ring (45).

8. Ergometer according to one of the preceding claims,
**characterized in that**
at least one sensor (23) of the sensor unit (18) is arranged on an axial end face of a bearing component (44).

9. Ergometer according to one of the preceding claims,
**characterized in that**
at least one sensor (23) can be positioned in a coating method.

10. Ergometer according to Claim 9,
**characterized in that**
at least one sensor (23) can be positioned in a screenprinting method.

11. Ergometer according to one of the preceding claims,
**characterized in that**
in addition to the characteristic variables detected by the sensor unit (17, 18, 48), at least one further characteristic variable from a further sensor unit (27, 28, 29, 30, 31, 32) can be evaluated in the evaluation unit (19, 35).

12. Ergometer according to Claim 11,
**characterized in that**
at least one further sensor unit (27) can be used to detect a characteristic variable for a relative wind.

13. Ergometer according to Claim 11 or 12,
**characterized in that**
characteristic variables for a weight distribution on a seat (42) can be detected by means of at least one further sensor unit (28).

14. Ergometer according to one of Claims 11 to 13,
**characterized in that**
a characteristic variable for a geographical elevation can be detected by means of at least one further sensor unit (32).

15. Ergometer according to one of Claims 11 to 14,
**characterized in that**
a geographical location can be determined by means of at least one unit (34).

16. Ergometer according to one of Claims 11 to 15,
**characterized in that**
a characteristic variable for an incline can be detected by means of at least one further sensor unit (29).

17. Ergometer according to one of Claims 1 to 10 and one of Claims 11 to 16,
**characterized in that**
a characteristic variable for a current sitting position can be determined by means of the evaluation unit (19, 35).

18. Ergometer according to one of Claims 1 to 10 and one of Claims 11 to 17,
**characterized in that**
a characteristic variable for an advantageous gear ratio can be determined by means of the evaluation unit (19, 35).

19. Ergometer according to Claim 18,
**characterized in that**
the characteristic variable for an advantageous gear ratio can be used to initiate a gear shift process using a control unit.

20. Ergometer according to one of the preceding claims,
**characterized in that**
a mobile evaluation unit (19, 35) has an interface, by means of which at least data can be transmitted to a second evaluation unit (35) and/or output unit (36).

21. Ergometer according to Claim 20,
**characterized in that**
data can be transmitted by radio from the mobile evaluation unit (19, 35) to the second evaluation unit (35) and/or output unit (36) using a unit (37).

## Revendications

1. Ergomètre pour appareils, notamment pour bicyclettes (10), comprenant un arbre (11) sur lequel sont disposés au moins deux moyens d'entraînement (14, 15) décalés dans le sens axial (12, 13) et comprenant au moins une unité de détection (17, 18, 48) disposée directement dans la zone d'un support (16) de l'arbre (11) et par le biais de laquelle peut être détectée au moins une grandeur caractéristique pour une force induite sur l'arbre (11), notamment une grandeur caractéristique pour une force d'appui, et comprenant au moins une unité d'interprétation (19, 35), l'unité de détection (17, 18, 48) permettant de détecter une grandeur caractéristique à l'aide de laquelle des forces induites sur les au moins deux moyens d'entraînement (14, 15) peuvent être déterminées séparément avec l'unité d'interprétation (19, 35) et l'unité de détection (17, 18, 48) permettant de détecter au moins deux forces intervenant de manière décalée dans le sens axial (12, 13), le support (16) présentant au moins deux paliers (20, 21) décalés dans le sens axial présentant chacun une bague extérieure et au moins un détecteur (22, 23, 47) de l'unité de détection (17, 18, 48) étant respectivement disposé dans la zone d'un des paliers (20, 21), **caractérisé en ce que** l'unité de détection (17, 18, 48) permet de détecter une grandeur caractéristique par le biais de laquelle peut être déterminée avec l'unité d'interprétation (19, 35) au moins une force appliquée dans le sens axial (12, 13) de l'arbre (11) sur au moins l'un des moyens d'entraînement (14, 15).

2. Ergomètre selon la revendication 1, **caractérisé en ce que** l'unité de détection (17, 18, 48) permet de détecter une grandeur caractéristique par le biais de laquelle peuvent être déterminées avec l'unité d'interprétation (19, 35) au moins deux forces appliquées de manière décalée dans le sens du pourtour (24) sur au moins l'un des moyens d'entraînement (14, 15).

3. Ergomètre selon la revendication 2, **caractérisé en ce qu'**au moins deux détecteurs (22, 47) de l'unité de détection sont décalés dans le sens du pourtour (24).

4. Ergomètre selon l'une des revendications précédentes, **caractérisé en ce qu'**au moins un détecteur (23) de l'unité de détection (18) s'étend sur une zone et le détecteur (23) permet de détecter des grandeurs caractéristiques pour un tracé de la force sur la zone.

5. Ergomètre selon l'une des revendications précédentes, **caractérisé en ce qu'**au moins un détecteur (22, 23, 25, 47) de l'unité de détection (17, 18, 48) est disposé de manière statique par rapport à une partie de boîtier (26).

6. Ergomètre selon la revendication 5, **caractérisé en ce que** l'unité de détection (17, 18, 48) présente au moins une bague de détection (40, 44, 45) munie d'un détecteur (22, 23, 25, 47).

7. Ergomètre selon la revendication 6, **caractérisé en ce que** la bague de détection (45) est disposée entre une bague extérieure d'un palier (20, 21) et un point d'appui dans la partie de boîtier (26) et un détecteur (47) est disposé dans au moins un creux (46) de la bague de détection (45).

8. Ergomètre selon l'une des revendications précédentes, **caractérisé en ce qu'**au moins un détecteur (23) de l'unité de détection (18) est disposé sur un côté frontal axial d'un composant support (44).

9. Ergomètre selon l'une des revendications précédentes, **caractérisé en ce qu'**au moins un détecteur (23) peut être positionné au cours d'un procédé de revêtement.

10. Ergomètre selon la revendication 9, **caractérisé en ce qu'**au moins un détecteur (23) peut être positionné au cours d'un procédé de sérigraphie.

11. Ergomètre selon l'une des revendications précédentes, **caractérisé en ce qu'**en plus des grandeurs caractéristiques détectées par l'unité de détection (17, 18, 48), au moins une grandeur caractéristique supplémentaire provenant d'une autre unité de détection (27, 28, 29, 30, 31, 32) peut être interprétée dans l'unité d'interprétation (19, 35).

12. Ergomètre selon la revendication 11, **caractérisé en ce qu'**une grandeur caractéristique d'un vent de déplacement peut être détectée par le biais d'au moins une unité de détection (27) supplémentaire.

13. Ergomètre selon la revendication 11 ou 12, **caractérisé en ce que** des grandeurs caractéristiques d'une distribution du poids sur un siège (42) peuvent être détectées par le biais d'au moins une unité de détection (28) supplémentaire.

14. Ergomètre selon l'une des revendications 11 à 13, **caractérisé en ce qu'**une grandeur caractéristique d'une altitude géographique peut être détectée par le biais d'au moins une unité de détection (32) supplémentaire.

15. Ergomètre selon l'une des revendications 11 à 14, **caractérisé en ce qu'**une position géographique peut être déterminée par le biais d'au moins une unité (34).

16. Ergomètre selon l'une des revendications 11 à 15, **caractérisé en ce qu'**une grandeur caractéristique d'une pente peut être détectée par le biais d'au moins une unité de détection (29) supplémentaire.

17. Ergomètre selon l'une des revendications 1 à 10 et l'une des revendications 11 à 16 **caractérisé en ce qu'**une grandeur caractéristique d'une posture actuelle du siège peut être déterminée par le biais de l'unité d'interprétation (19, 35).

18. Ergomètre selon l'une des revendications 1 à 10 et l'une des revendications 11 à 17, **caractérisé en ce qu'**une grandeur caractéristique d'un rapport de démultiplication avantageux peut être déterminée par le biais de l'unité d'interprétation (19, 35).

19. Ergomètre selon la revendication 18, **caractérisé en ce qu'**une opération de changement de rapport d'un engrenage peut être initiée avec une unité de commande par le biais de la grandeur caractéristique d'un rapport de démultiplication avantageux.

20. Ergomètre selon l'une des revendications précédentes, **caractérisé en ce qu'**une unité d'interprétation mobile (19, 35) présente une interface qui permet au moins de communiquer des données à une deuxième unité d'interprétation (35) et/ou à une unité de sortie (36).

21. Ergomètre selon la revendication 20, **caractérisé en ce que** des données peuvent être communiquées par voie radioélectrique avec une unité (37) depuis l'unité d'interprétation mobile (19, 35) à la deuxième unité d'interprétation (35) et/ou à l'unité de sortie (36).
